# EUROPEAN PATENT APPLICATION

(11) **EP 2 508 564 A1**
(43) Date of publication of application: **10.10.2012**
(21) Application number: 10834579.4
(22) Date of filing: 01.12.2010
(51) Int. Cl.: C08L 27/18, C08F 214/26, C08J 5/18, C08K 3/00, C08K 5/06

(54) **PROCESS FOR PRODUCING FLUOROCOPOLYMER NANOCOMPOSITE**

(30) Priority: 03.12.2009 JP 2009275757
(71) Applicant: Asahi Glass Company, Limited, Tokyo 100-8405 (JP)
(72) Inventor: IRUYA, Ken, Tokyo 100-8405 (JP); SATO, Takashi, Tokyo 100-8405 (JP)
(74) Representative: Hoffmanns, Ulrich
(86) International application number: PCT/JP2010/071505
(87) International publication number: WO 2011/068129

(57) **Abstract**

To provide a process for producing a fluorinated copolymer nanocomposite comprising a fluorinated copolymer and inorganic fine particles dispersed therein to a high degree, and a process for producing a molded fluororesin product.

The process for producing a fluorinated copolymer nanocomposite comprising a fluorinated copolymer and inorganic fine particles, characterized in that a mixture (A) containing a fluorinated copolymer comprised of repeating units based on tetrafluoroethylene and repeating units based on ethylene, inorganic fine particles, and a solvent which can dissolve the fluorinated copolymer under ordinary or elevated pressure at a temperature of not higher than the melting point of the fluorinated copolymer, is heated to at least a temperature at which the fluorinated copolymer dissolves in the solvent, and the solvent is subsequently removed. The process for producing a molded fluororesin product by using the fluorinated copolymer nanocomposite to produce a molded product.

## Description

### TECHNICAL FIELD

The present invention relates to a process for producing a fluorinated copolymer nanocomposite.

### BACKGROUND ART

Recently, a barrier property material which prevents transmission of gas or liquid has been required for various applications to deal with environmental problems. For example, a fluorinated copolymer generally called "a fluororesin" has been employed as a material for a fuel hose because of its excellent fuel barrier property. Such a fluorinated copolymer has characteristics such as high heat resistance and high chemical resistance, and a low refractive index and low electric conductivity. On the other hand, such a fluorinated copolymer does not have a sufficiently high water-vapor barrier property which will be required in the future to deal with legal restrictions and to increase performance. Further, its wear resistance is not sufficient since its elastic modulus is low.

To increase the water-vapor barrier property of a fluorinated copolymer, heretofore, a method of laminating another material having an excellent water-vapor barrier property onto the fluorinated copolymer or increasing the film thickness of the fluorinated copolymer has been employed.

A method of mixing a hard filler to a fluorinated copolymer has been known to be effective for increasing the elastic modulus or hardness of the fluorinated copolymer. As such a filler, a various organic or inorganic filler made of fibers or fine particles, such as carbon nanotubes or clay may, for example, be used depending upon the purpose of use (Patent Document 1). Further, blending of a filler has also been known to be effective as a method of increasing the above-described water-vapor barrier property (Patent Document 2).

As a method for blending inorganic fine particles to the fluorinated copolymer, a method such as a powder mixing method, a melt-kneading method or the like may be used. Usually, inorganic fine particles are likely to undergo aggregation of primary particles to form secondary particles having a large particle size. In the case of inorganic fine particles having a small primary particle size, by a conventional blending method, it has been difficult to finely disperse secondary particles to a level of primary particles and uniformly mix them during melt-kneading them with the fluorinated copolymer. On the other hand, in the case of inorganic fine particles having a relatively large primary particle size, even if secondary particles are formed, secondary particles are likely to easily disintegrated by a shearing energy in the step of melt-kneading with the fluorinated copolymer, and thus can be dispersed in a state of primary particles. Further, to improve dispersability of inorganic fine particles in the fluorinated copolymer, coating of the surface of inorganic fine particles by various hydrophobic compounds has been known (Patent Documents 3 and 4). However, in the case of a flake-shaped filler such as clay or Montmorillonite, it is difficult to peel off each piece of flakes to coat its surface by a hydrophobic compound, and its dispersability is not sufficient.

If the dispersability of inorganic fine particles is not sufficient, the transparency of the fluorinated copolymer blended with such inorganic fine particles may decrease, and the light transmittance may decrease.

Therefore, development of a technique to easily and uniformly disperse a filler such as inorganic fine particles to a fluorinated copolymer has been desired.

### PRIOR ART DOCUMENTS

### PATENT DOCUMENTS

Patent Document 1: JP-A-2008-274060
Patent Document 2: JP-A-2001-114966
Patent Document 3: JP-A-2007-162029
Patent Document 4: JP-A-7-112126

### DISCLOSURE OF INVENTION

### TECHNICAL PROBLEM

Under the above-described background, it is an object of the present invention to provide, in a technique of mixing a fluorinated copolymer and inorganic fine particles, a mixing technique for producing a molded fluororesin product having a high elastic modulus, an excellent optical transparency and a specific property represented by a water-vapor barrier property, by increasing dispersability of inorganic fine particles in a fluorinated copolymer.

### SOLUTION TO PROBLEM

The present invention provides a process for producing a fluorinated copolymer nanocomposite comprising a fluorinated copolymer and inorganic fine particles and a process for producing a molded fluororesin product, which have the following constructions.
[1] A process for producing a fluorinated copolymer nanocomposite comprising a fluorinated copolymer and inorganic fine particles, characterized in that a mixture (A) containing a fluorinated copolymer comprised of repeating units based on tetrafluoroethylene and repeating units based on ethylene, inorganic fine particles, and a solvent which can dissolve the fluorinated copolymer under ordinary or elevated pressure at a temperature of not higher than the melting point of the fluorinated copolymer, is heated to at least a temperature at which the fluorinated copolymer dissolves in the solvent, and the solvent is subsequently removed.
[2] The process for producing a fluorinated copolymer nanocomposite according to the above [1], wherein the mass ratio of the total amount of the fluorinated copolymer and the inorganic fine particles to the amount of the solvent in the mixture (A) ((fluorinated copolymer + inorganic fine particles)/solvent) is from 1/99 to 90/10.
[3] The process for producing a fluorinated copolymer nanocomposite according to the above [1] or [2], wherein the mixture (A) is a mixture of the fluorinated copolymer and a dispersion prepared by preliminarily dispersing the inorganic fine particles in the solvent.
[4] The process for producing a fluorinated copolymer nanocomposite according to the above [1] to [3], wherein the amount of the solvent in the mixture (A) is an amount larger than the amount at which the total amount of the fluorinated copolymer in the mixture (A) can be dissolved.
[5] The process for producing a fluorinated copolymer nanocomposite according to the above [1] to [4], wherein the molar ratio of (repeating units based on tetrafluoroethylene) / (repeating units based on ethylene) is from 90/10 to 35/65, and the total content of repeating units based on tetrafluoroethylene and repeating units based on ethylene is larger than 80 mol% based on the total repeating units.
[6] The process for producing a fluorinated copolymer nanocomposite according to the above [1] to [5], wherein the average particle size of the inorganic fine particles is from 0.1 nm to 3 µm.
[7] The process for producing a fluorinated copolymer nanocomposite according to the above [1] to [6], wherein the solvent is at least one member selected from the group consisting of a fluorinated aromatic compound, an aliphatic compound containing at least one carbonyl group, and a hydrofluoroalkyl ether.
[8] The process for producing a fluorinated copolymer nanocomposite according to the above [1] to [7], wherein the fluorinated copolymer nanocomposite contains from 0.1 to 30 mass% of the inorganic fine particles based on the fluorinated copolymer.
[9] The process for producing a fluorinated copolymer nanocomposite according to the above [1] to [8], wherein the temperature for heating the mixture (A) is less than the melting point of the fluorinated copolymer.
[10] A process for producing a molded fluororesin product, characterized in that the fluorinated copolymer nanocomposite produced by the process as defined in the above [1] to [9] is molded to produce a molded product of the fluorinated copolymer nanocomposite.
[11] A process for producing a molded fluororesin product, characterized in that molding of the fluorinated copolymer nanocomposite produced by the process as defined in the above [1] to [9] is carried out while removing the solvent.
[12] The process for producing a molded fluororesin product according to the above [10] or [11], wherein the molded fluororesin product is a fluororesin film.

### ADVANTAGEOUS EFFECTS OF INVENTION

According to the process for producing a fluorinated copolymer nanocomposite comprising a fluorinated copolymer and inorganic fine particles of the present invention, it is possible to disperse inorganic fine particles in a fluorinated copolymer at a high level.

According to the process for producing a molded fluororesin product of the present invention, it is possible to produce a molded fluororesin product having a high elastic modulus, excellent transparency, and excellent water-vapor barrier property easily and reliably, from the fluorinated copolymer nanocomposite.

### DESCRIPTION OF EMBODIMENTS

Now, the production process of the present invention will be described in detail below. In this application, the fluorinated copolymer nanocomposite means a fluorinated copolymer containing inorganic fine particles wherein the inorganic fine particles are dispersed in the fluorinated copolymer. Further, the molded fluororesin product means a molded product obtained by molding the fluorinated copolymer nanocomposite.

### (Copolymer composition of fluorinated copolymer)

The fluorinated copolymer of the present invention is a fluorinated copolymer comprised of repeating units based on tetrafluoroethylene (hereinafter sometimes referred to as "TFE") and repeating units based on ethylene (hereinafter sometimes referred to as "E"). The molar ratio of (repeating units based on TFE)/(repeating units based on E) in the fluorinated copolymer is preferably from 90/10 to 35/65, more preferably from 80/20 to 45/55, most preferably from 75/25 to 55/45. If the content of repeating units based on TFE is lower than the above range, the heat resistance, weather resistance, chemical resistance, reagent-penetration-preventing property, etc. of the fluorinated copolymer may deteriorate. On the other hand, if the content of repeating units based on TFE is higher than the above range, the mechanical strength, melt-moldability, etc. may deteriorate. When the molar ratio is within the above range, the fluorinated copolymer will be excellent in the heat resistance, weather resistance, chemical resistance, reagent-penetration-preventing property, mechanical strength, melt-moldability, etc.

The fluorinated copolymer of the present invention may further contain repeating units based on other monomers within a range not to impair the essential properties. However, the total amount of repeating units based on TFE and repeating units based on E is preferably larger than 80 mol% based on the total repeating units.

Other monomers may, for example, be an α-olefin such as propylene, butene or isobutene; a compound represented by CH₂=CX(CF₂)ₙY (wherein each of X and Y which are independent of each other is a hydrogen or fluorine atom, and n is an integer of from 2 to 8) (hereinafter referred to as "FAE"); a C₂₋₄ fluoroolefin having hydrogen atoms in an unsaturated group (excluding the above-described CH₂=CX(CF₂)ₙY), such as vinylidene fluoride (VDF), vinyl fluoride (VF), trifluoroethylene or hexafluoroisobutylene (HFIB); and a perfluoroolefin (excluding TFE) such as hexafluoropropylene (HFP), chlorotrifluoroethylene (CTFE), or a perfluoro(alkyl vinyl ether) (PAVE) such as a perfluoro(methyl vinyl ether) (PMVE), perfluoro (ethyl vinyl ether) (PEVE), perfluoro(propyl vinyl ether) (PPVE) or perfluoro(butyl vinyl ether) (PBVE). Such other monomers may be used alone or in combination as a mixture of two or more of them.

The content of repeating units based on other monomers in the fluorinated copolymer is preferably from 0.01 to 20 mol%, more preferably from 0.1 to 15 mol%, further preferably from 0.4 to 10 mol%, based on the total repeating units in the fluorinated copolymer.

The other monomers are preferably FAE. If n in the formula is less than 2, the properties of the fluorinated copolymer are likely to be inadequate, e.g. stress cracking of the molded product occurs. If n in the formula exceeds 8, such tends to be disadvantageous from the viewpoint of the polymerization reactivity. Here, stress cracking is a breaking phenomenon such as cracking of a molded product under stress or the like.

As specific examples of FAE, CH₂ =CF(CF₂)₂ F, CH₂ =CF(CF₂)₃ F, CH₂ =CF(CF₂)₄ F, CH₂ =C_{F}(CF₂)₅ F, CH₂ =CF(CF₂)₈ F, CH₂ =CF(CF₂)₂ H, CH₂ =CF(CF₂)₃ H, CH₂ =CF(CF₂)₄ H, CH₂ =CF(CF₂)₅ H, CH₂ =CF(CF₂)₈ H, CH₂ =CH(CF₂)₂ F, CH₂ =CH(CF₂)₃ F, CH₂ =CH(CF₂)₄ F, CH₂ =CH(CF₂)₅ F, CH₂=CH(CF₂)₈ F, CH₂=CH(CF2)₂ H, CH₂=CH(CF₂)₃ H, CH₂=CH(CF₂)₄ H, CH₂ =CH(CF₂)₅ H and CH₂ =CH(CF₂)₈ H may, for example, be mentioned.

FAE is more preferably a compound represented by CH₂=CH(CF₂)ₙY. In such a case, n in the formula is more preferably n=2 to 6, whereby the molded product will be excellent in stress cracking resistance, and n=2 to 4 is most preferred. Further, one type of FAE may be used alone, or two or more types of FAE may be used in combination.

The content of repeating units based on FAE in the fluorinated copolymer is preferably from 0.01 to 10 mol%, more preferably from 0.1 to 7 mol%, most preferably from 0.4 to 4 mol%, based on the total repeating units in the fluorinated copolymer. If the content of FAE is lower than the above-described range, the stress cracking resistance of a molded product to be formed from the fluorinated copolymer may decrease, and if it exceeds the above-described range, the mechanical strength of the fluorinated copolymer may deteriorate.

### (Process for producing fluorinated copolymer)

The process for producing a fluorinated copolymer of the present invention is not particularly limited, and it is possible to employ a polymerization method wherein tetrafluoroethylene, ethylene and, as the case requires, other monomers are copolymerized in the presence of a radical polymerization initiator, chain transfer agent and polymerization medium which are commonly used. The polymerization method may be, as per se known, bulk polymerization; solution polymerization using, as a polymerization medium, an organic solvent such as a fluorinated hydrocarbon, a chlorinated hydrocarbon, a fluoro-chlorinated hydrocarbon, an alcohol or a hydrocarbon; suspension polymerization using as a polymerization medium an aqueous medium and, if necessary a suitable organic solvent; and emulsion polymerization using an aqueous medium as the polymerization medium and an emulsifier. Particularly preferred is a solution polymerization. A single vessel- or multi vessel-type stirring-type polymerization apparatus, a tubular polymerization apparatus or the like may be used as the reactor, and the reaction can be carried out in a batch system or continuous system operation.

The radical polymerization initiator is preferably an initiator having a half-life of 10 hours at a temperature of from 0 to 100°C, more preferably at a temperature of from 20 to 90°C. It may, for example, be an azo compound such as azobisisobutyronitrile; a peroxydicarbonate such as diisopropyl peroxydicarbonate; a peroxyester such as tert-butyl peroxypivalate, tert-butyl peroxyisobutyrate or tert-butyl peroxyacetate; a known-fluorine type diacyl peroxide such as isobutyl peroxide, octanoyl peroxide, benzoyl peroxide or lauroyl peroxide; a fluorine-containing diacyl peroxide such as (Z(CF₂)ₚCOO)₂ (wherein Z is a hydrogen atom, a fluorine atom or a chlorine atom, and P is an integer of from 1 to 10); or an inorganic peroxide such as potassium persulfate, sodium persulfate or ammonium persulfate.

The amount of the radical polymerization initiator to be used is preferably from 0.0001 to 1.0 mass%, more preferably from 0.0005 to 0.5 mass%, most preferably from 0.001 to 0.1 mass%, based on the polymerization medium.

The polymerization medium may, for example, be an organic solvent such as a fluorinated hydrocarbon, a chlorinated hydrocarbon, a fluoro-chlorinated hydrocarbon, an alcohol a hydrocarbon, or an aqueous medium, as mentioned above.

The mass ratio of the fluorinated copolymer to the polymerization medium (fluorinated copolymer/polymerization medium) is preferably from 1/99 to 80/20, more preferably from 2/98 to 60/40, most preferably from 5/95 to 50/50.

The chain transfer agent may, for example, be an alcohol such as methanol or ethanol; a chlorofluorohydrocarbon such as 1,3-dichloro-1,1,2,2,3-pentafluoropropane or 1,1-dichloro-1-fluoroethane; or a hydrocarbon such as pentane, hexane or cyclohexane. The amount of the chain transfer agent to be used is usually preferably from 0.01 to 100% mass%, more preferably from 0.05 to 70 mass%, most preferably from 0.1 to 50 mass%, based on the polymerization medium. By adjusting the amount of the chain transfer agent to be used, it is possible to control the molecular weight of the fluorinated copolymer. A chain transfer agent having a low chain transfer property may also be used as a polymerization medium, not only as a chain transfer agent.

The polymerization conditions are not particularly limited, but the polymerization temperature is usually preferably from 0 to 100°C, more preferably from 20 to 90°C. The polymerization pressure is preferably from 0.1 to 10 MPa, more preferably from 0.5 to 3 MPa. As the polymerization pressure is higher within the above range, the obtainable polymer tends to have a higher molecular weight, and therefore it is possible to adjust the molecular weight by the polymerization pressure. The polymerization time may vary depending upon the polymerization temperature, the polymerization pressure, etc., but it is usually preferably from 1 to 30 hours, more preferably from 2 to 10 hours.

The content (concentration) of the fluorinated copolymer in the polymerization medium at the termination of the polymerization reaction is usually at a level of from 0.03 to 0.2 g/cm³, and when it is within this range, stirring of the reaction system, releasing of the heat of polymerization, etc. at a time of polymerization become easier, such being preferred. Further, the molecular weight of the fluorinated copolymer can be adjusted by this concentration. By appropriately selecting the above-described polymerization conditions, it is possible to control the molecular weight of the fluorinated copolymer and the melt viscosity of the fluorinated copolymer which is closely related to the molecular weight.

### (Inorganic fine particles)

The inorganic fine particles of the present invention are not particularly limited, and may be appropriately selected based on properties which are desired to be improved in the fluorinated copolymer. For example, silica, zeolite, calcium carbonate, barium carbonate, magnesium carbonate, calcium sulfate, barium sulfate, magnesium sulfate, zinc oxide, calcium oxide, magnesium oxide, iron oxide, titanium oxide, tin oxide, aluminum hydroxide, magnesium hydroxide, calcium phosphate, zirconia, etc.; pigments such as carbon, carbon nanotube, titanium white or pigment-coated mica; and flake-shaped inorganic fine particles such as mica, clay, mica, talc, Montmorillonite or kaolin may be mentioned. With a view to improving water-vapor barrier property, the inorganic fine particles are preferably flake-shaped inorganic fine particles such as mica, clay, mica, talc, Montmorillonite or kaolin. To improve dispersability of the inorganic fine particles in the fluorinated copolymer, it is preferred to use inorganic fine particles subjected to a surface treatment by a coupling agent having a linear or branched fluorohydrocarbon group, etc. Further, the shape of the inorganic fine particles is not particularly limited, and any one known per se can be used.

The average particles size of the inorganic fine particles is preferably from 0.1 nm to 3 µm, more preferably from 1 nm to 2 µm, most preferably from 10 nm to 1 µm. If the average particle size of the inorganic fine particles exceeds 3 µm, the transparency of the molded fluororesin product decreases. When it is within the above range, the transparency of the molded fluororesin product becomes excellent. Here, the average particle size means a secondary particle size when the inorganic fine particles form secondary particles.

In a case where the inorganic fine particles have a flake shape, their thickness is preferably from 0.1 nm to 1 µm, more preferably from 0.3 nm to 0.2 µm, most preferably from 0.5 nm to 0.1 µm. Their aspect ratio is preferably from 3 to 1,000, more preferably from 5 to 700, most preferably from 10 to 500.

The content of the inorganic fine particles is preferably from 0.1 to 30 mass%, more preferably from 0.5 to 20 mass%, most preferably from 1 to 10 mass%, based on the fluorinated copolymer.

### (Solvent which can dissolve fluorinated copolymer)

The solvent which can dissolve a fluorinated copolymer in the present invention is a solvent which can dissolve the fluorinated copolymer under ordinary or elevated pressure at a temperature of not higher than the melting point of the fluorinated copolymer. The solvent is not particularly limited so long as it is a solvent which can dissolve the above-described fluorinated copolymer, but is preferably at least one solvent selected from the group consisting of a fluorinated aromatic compound, an aliphatic compound containing at least one carbonyl group, and a hydrofluoroalkyl ether.

Although many solvents cannot dissolve the above-described fluorinated copolymer at room temperature, the above solvent can dissolve the fluorinated copolymer by heating to a temperature lower than the melting point of the fluorinated copolymer and provides a transparent and uniform solution of the fluorinated copolymer. The above solvent is preferably a solvent which can dissolve at least 1 mass% of the fluorinated copolymer at a temperature of not higher than the melting point of the fluorinated copolymer. The amount of the fluorinated copolymer can be dissolved is more preferably at least 5 mass%, most preferably at least 10 mass%.

The melting point of the fluorinated aromatic compound which can dissolve the fluorinated copolymer is preferably at most 230°C, more preferably at most 200°C, further preferably at most 180°C. When the melting point is within the above range, the handling efficiency of the fluorinated copolymer at the time of dissolving it becomes excellent. Further, the fluorine content in the fluorinated aromatic compound ((the amount of fluorine atom × the number of fluorine atoms in the molecules) × 1 00/molecular weight) is preferably from 5 to 75 mass%, more preferably from 9 to 75 mass%, most preferably from 12 to 75 mass%. When it is within the above range, the solubility of the fluorinated copolymer becomes good.

As specific examples of the fluorinated aromatic compound, a fluorinated benzonitrile, a fluorinated benzoic acid and its ester, a fluorinated polycyclic aromatic compound, a fluorinated nitrobenzene, a fluorinated phenylalkyl alcohol, a fluorinated phenol and its ester, a fluorinated aromatic ketone, a fluorinated aromatic ether, a fluorinated aromatic sulfonyl compound, a fluorinated pyridine compound, a fluorinated aromatic carbonate, a perfluoroalkyl-substituted benzene, a perfluorobenzene, a polyfluoroalkyl ester of benzoic acid, a polyfluoroalkyl ester of phthalic acid, and an aryl ester of trifluoromethane sulfonic acid may, for example, be mentioned. The fluorinated aromatic compound is preferably a fluorinated aromatic compound having at least two fluorine atoms. The fluorinated aromatic compound may be used alone or in combination as a mixture of two or more of them.

As more preferred examples of the fluorinated aromatic compound, pentafluorobenzonitrile, 2,3,4,5-tetrafluorobenzonitrile, 2,3,5,6-tetrafluorobenzonitrife, 2,4,5-trifluorobenzonitrile, 2,4,6-trifluorobenzonitrile, 3,4,5-trifluorobenzonitrile, 2,3-difluorobenzonitrile, 2,4-difluorobenzonitrile, 2,5-difluorobenzonitrile, 2,6-difluorobenzonitrile, 3,4-difluorobenzonitrile, 3,5-difluorobenzonitrile, 4-fluorobenzonitrile, 3,5-bis(trifluoromethyl)benzonitrile, 2-(trifluoromethyl)benzonitrile, 3-(trifluoromethyl)benzonitrile, 4-(trifluoromethyl)benzonitrile, 2-(trifluoromethoxy)benzonitrile, 3-(trifluoromethoxy)benzonitrile, 4-(trifluoromethoxy)benzonitrile, (3-cyanophenyl)sulfur pentafluoride, (4-cyanophenyl)sulfur pentafluoride, pentafluorobenzoic acid, ethyl pentafluorobenzoate, methyl 2,4-difluorobenzoate, methyl 3-(trifluoromethyl)benzoate, methyl 4-(trifluoromethyl)benzoate, methyl 3,5-bis(trifluoromethyl)benzoate, perfluorobiphenyl, perfluoronaphthalene, pentafluoronitrobenzene, 2,4-difluoronitrobenzene, (3-nitrophenyl)sulfur pentafluoride, pentafluorobenzyl alcohol, 1-(pentafluorophenyl)ethanol, pentafluorophenyl acetate, pentafluorophenyl propionate, pentafluorophenyl butanoate, pentafluorophenyl pentanoate, pefluorobenzophenone, 2,3,4,5,6-pentafluorobenzophenone, 2',3',4',5',6'-pentafluoroacetophenone, 3',5'-bis(trifluoromethyl)acetophenone, 3'-(trifluoroethyl)acetophenone, 2,2,2-trifluoroacetophenone, pentafluoroanisole, 3,5-bis(trifluoromethyl)anisole, decafluorodiphenyl ether, 4-bromo-2,2',3,3',4',5,5',6,6'-nonafluorodiphenyl ether, pentafluorophenylsulfonyl chloride, pentafluoropyridine, 3-cyano-2,5,6-trifluoropyridine, bis(pentafluorophenyl)carbonate, benzotrifluoride, 4-chlorobenzotrifluoride,-1,3-bis(trifluoromethyl)benzene, hexafluorobenzene, 2,2,2-trifluoroethyl benzoate, 2,2,3,3-tetrafluoropropyl benzoate, 2,2,3,3,3-pentafluoropropyl benzoate, 3,3,4,4,5,5,6,6,7,7,8,8,8-tridecafluorooctyl benzoate, bis(2,2,2-trifluoroethyl) phthalate, and 4-acetylphenyl trifluoromethane sulfonate may, for example, be mentioned.

The melting point of the aliphatic compound which can dissolve the fluorinated copolymer and containing at least one carbonyl group is preferably at most 220°C, more preferably at most 50°C, most preferably at most 20°C. Further, the boiling point of the aliphatic compound containing at least one carbonyl group is preferably the same as or higher than the temperature at which the fluorinated copolymer is dissolved.

However, in the present invention, in a case where dissolution of the fluorinated copolymer is carried out under autogenous pressure or below, an aliphatic compound containing at least one carbonyl group having a boiling point of less than the dissolution temperature is also applicable. The "autogenous pressure" means a pressure which a mixture of the solvent and the fluorinated copolymer spontaneously shows in a closed vessel. In a case where an aliphatic compound containing at least one carbonyl group having a lower boiling point is used, the autogenous pressure tends to be high, and therefore from the viewpoints of safety and convenience, the boiling point of the aliphatic compound containing at least one carbonyl group is preferably at least room temperature, more preferably at least 50°C, most preferably at least 80°C. Further, the upper limit of the boiling point of the aliphatic compound containing at least one carbonyl group is not particularly limited, but is preferably at most 220°C from the viewpoint of drying properties, etc., when it is used for a thin film formation by coating or the like.

The aliphatic compound containing at least one carbonyl group is preferably at least one member selected from the group consisting of a ketone such as a C₃₋₁₀ cyclic ketone or a linear ketone, an ester such as a linear ester or a monoether monoester of a glycol and a carbonate. The number of carbonyl group(s) is preferably 1 or 2.

The molecular structure of the aliphatic compound containing at least one carbonyl group is not particularly limited. For example, its carbon state may be linear, branched or cyclic, and an etheric oxygen may be present between a carbon-carbon bond constituting its main chain or its side chain, and some of hydrogen atoms bonded to carbon atoms may be substituted by a halogen atom such as a fluorine atom. Among them, a cyclic ketone is more preferred as the above aliphatic compound containing at least one carbonyl group. They may be used alone or in combination as a mixture of two or more of them.

As specific and more preferred examples of the above-described aliphatic compound containing at least one carbonyl group in the present invention, the following compounds may be mentioned.

The above-described cyclic ketone may be cyclopentanone, cyclohexanone, 2-methylcyclohexanone, 3-methylcyclohexanone, 4-ethylcyclohexanone, 2,6-dimethylcyclohexanone, 3,3,5-trimethylcyclohexanone, 4-tert-butylcyclohexanone, cycloheptanone or isophorone.

The above-described linear ketone may be acetone, methyl ethyl ketone, 2-pentanone, methyl isopropyl ketone, 2-hexanone, methyl isobutyl ketone, 2-heptanone, 2-octanone, 2-nonanone, diisobutyl ketone or 2-decanone.

The above-described linear ester may be ethyl formate, isopentyl formate, methyl acetate, ethyl acetate, butyl acetate, isobutyl acetate, pentyl acetate, isopentyl acetate, hexyl acetate, cyclohexyl acetate, 2-ethylhexyl acetate, ethyl butyrate, butyl butyrate, pentyl butyrate, bis(2,2,2-trifluoroethyl)adipate, methyl cyclohexanecarboxylate, 2,2,2-trifluoroethyl cyclohexanecarboxylate or ethyl perfluoropentanoate.

The above-described monoether monoester of a glycol may be 2-methoxyethyl acetate, 2-ethoxyethyl acetate, 2-butoxyethyl acetate, 1-methoxy-2-acetoxypropane, 1-ethoxy-2-acetoxypropane, 3-methoxybutyl acetate or 3-methoxy-3-methylbutyl acetate.

The above-described carbonate may be bis(2,2,3,3-tetrafluoropropyl)carbonate, bis(2,2,2,-trifluoroethyl)carbonate, diethyl carbonate or propylene carbonate.

The hydrofluoroalkyl ether which can dissolve the fluorinated copolymer may, for example, be specifically 1,1,1,2,3,3-hexafluoro-4-(1,1,2,3,3,3-hexafluoropropoxy)pentane, 1,1,1,2,2,3,4,5,5,5-decafluoro-3-methoxy-4-(trifluoroethyl)pentane. Among them, 1,1,1,2,3,3-hexafluoro-4-(1,1,2,3,3,3-hexafluoropropoxy)pentane is preferred.

The above-described solvents which can dissolve the fluorinated copolymer may be used alone or in combination as a mixture of two more of them. When two or more of them are used, the rate of phase separation can sometimes be controlled.

In the present application, a solvent which does not dissolve nor swell the fluorinated copolymer up to the melting point of the fluorinated copolymer or the boiling point of a liquid is defined as a non-solvent. In the production process of the present invention, a non-solvent may be contained in the fluorinated copolymer within a range not to impair the solubility of the fluorinated copolymer.

### (Process for producing fluorinated copolymer nanocomposite)

The mixture (A) of the production process of the present invention is a mixture of the fluorinated copolymer, inorganic fine particles and a solvent, and it is preferred that these components are mixed uniformly. The content of the solvent in the mixture (A) is preferably no less than the amount which can dissolve the total amount of the fluorinated copolymer. It may be no less than the amount which can dissolve a part of the fluorinated copolymer, and in this case, the solvent acts as a dispersion medium of the inorganic fine particles. The mass ratio of the total amount of the fluorinated copolymer and the inorganic fine particles to the amount of the solvent ((fluorinated copolymer + inorganic fine particles)/solvent) is preferably from 1/99 to 90/10, more preferably from 5/95 to 80/20, further preferably from 15/85 to 70/30, most preferably from 20/80 to 50/50.

In the process for obtaining the mixture (A) by mixing fluorinated copolymer, inorganic fine particles and solvent, a conventional kneading machine, disperser and powder mixer may be used. In a case where the mixture (A) is a high viscous mixture, a kneading machine is preferably used, and in the case of a low viscous mixture, a disperser is preferably used. Further, to disperse the fluorinated copolymer or the inorganic fine particles in the solvent, an ultrasonic wave or the like may be used. Further, the above-described inorganic fine particles are preferably, preliminarily, mixed with the solvent or the fluorinated copolymer before use. In the production process of the present invention, it is particularly preferred to use a dispersion prepared by preliminarily dispersing the inorganic fine particles in the solvent. When the inorganic fine particles are preliminarily dispersed in the solvent and then the fluorinated copolymer is dissolved therein, it becomes possible to increase dispersability of the inorganic fine particles which are less likely to disperse. To obtain a uniform mixture (A) by mixing in a shorter period of time, it is preferred to knead the solvent and the fluorinated copolymer, and a further added component such as the inorganic fine particles by means of a kneading machine. As specific examples of a kneading apparatus, a pressure container with a batch kneading apparatus or stirring apparatus such as a Banbury mixer or a pressure kneader, and an apparatus having both functions of kneading and extrusion, such as an extruder or a kneader may be mentioned.

In the case of mixing under pressure, the above pressure container with a stirring apparatus, e.g. an apparatus such as an autoclave with a stirrer, is used. As the shape of a stirring blade, a marine propeller blade, a paddle blade, an anchor blade, a turbine blade or the like may be mentioned. Further, in the case of using the apparatus having both functions of kneading and extrusion such as a single screw or twin screw extruder, the fluorinated copolymer and the solvent, and a component of the inorganic fine particles are quantitatively supplied respectively from separate feeders to the single screw or twin screw extruder and kneaded in the extruder to produce the mixture (A).

As the disperser, a conventional disperser is used. For example, Beads Mill (DYNO-MILL, manufactured by Shinmaru Enterprise Corporation), TK Labodisper, TK Filmix, TK Pipeline Mixer, TK Homomix Line Mill, TK Homojetter, TK Unimixer, TK Homomix Line Flow, TK Agihomo Disper (each of them is manufactured by Tokushu Kika Kogyo Co., Ltd.), Homogenizer·POLYTRON (manufactured by Central Scientific Commerce, Inc.), Homogenizer·HISTRON (manufactured by Microtech Co., Ltd.) Biomixer (manufactured by Nippon Seiki Co., Ltd.), a turbo-type stirrer (manufactured by KODAIRA SEISAKUSHO Co., Ltd.), Ultradisper (manufactured by Asada Iron Works Co., Ltd.), Ebara Milzer (manufactured by Ebara Corporation), an ultrasonic wave apparatus or an ultrasonic bath (manufactured by As One Corporation), etc. may be mentioned.

A conventional powder mixer may be used to disrupt aggregates of the inorganic fine particles. For example, a homomixer, a Henschel mixer, a V-type mixer, a double-cone mixer, a ribbon-type mixer, a short-axis rotor type mixer, a turbine type mixer, a high speed mixer, a super mixer, a tumbler mixer, etc. may be mentioned.

In the present invention, the mixture (A) is heated to at least a temperature at which the fluorinated copolymer dissolves in the solvent, and the solvent is subsequently removed to obtain a fluorinated copolymer nanocomposite comprising the fluorinated copolymer and inorganic fine particles. The temperature at which the fluorinated copolymer dissolves in the solvent is not particularly limited so long as the fluorinated copolymer dissolves, but is preferably a temperature at which volatilization of the solvent does not occur. By heating to at least a temperature at which the fluorinated copolymer dissolves in the solvent, a transparent and uniform solution of the fluorinated copolymer and the solvent is formed. In the present invention, by heating to such a temperature, the mixture (A) becomes to contain the inorganic fine particles, whereby a liquid in which the inorganic fine particles are dispersed is formed.

Whether the fluorinated copolymer is dissolved in the solvent or not depends only on the type of the solvent used and the temperature, and is independent of the pressure. Accordingly, so long as the mixture (A) reaches a predetermined temperature, the pressure at that time is not particularly limited. In the case of using inorganic fine particles having a low heat resistance temperature, a temperature of less than a temperature at which the inorganic fine particles and a surface treatment agent are decomposed by heat is preferred. The temperature at which the fluorinated copolymer dissolves in the solvent is, particularly, preferably a temperature of less than the melting point of the fluorinated copolymer, and is preferably a temperature lower by at least 20°C than the melting point of the fluorinated copolymer.

In the present invention, the step of obtaining the mixture (A) by mixing the fluorinated copolymer, the inorganic fine particles and the solvent, and the step of heating to at least a temperature at which the fluorinated copolymer dissolves in the solvent may be carried out simultaneously or separately. Usually, it is preferred to heat after obtaining the mixture (A).

In the present invention, it is preferred to heat the mixture (A) to at least a temperature at which the fluorinated copolymer dissolves in the solvent to obtain a composition (A), and subsequently remove the solvent from the composition (A). Here, the composition (A) means a mixture which the fluorinated copolymer, the inorganic fine particles and the solvent are uniformly dispersed therein, and which is obtained by heating to at least a temperature at which the fluorinated copolymer dissolves in the solvent.

The method of removing the solvent is not particularly limited. For example, for a solvent having a low molecular weight and readily volatile, it may be removing by drying, or removing by extraction using a solvent (extraction solvent) miscible with the solvent in the composition (A). Among them, removing by extraction is preferred. The extraction solvent to be used for the extraction is a solvent miscible with the solvent which can dissolve the fluorinated copolymer and having a low solubility in the fluorinated copolymer. Specifically, it is preferred to use a higher alcohol, acetone or the non-solvent for the fluorinated copolymer by itself or as a mixed solvent of two or more of them. Among them, it is more preferred to use the non-solvent for the fluorinated copolymer as the extraction solvent.

The apparatus for carrying out extraction is not particularly limited so long as it is an apparatus which can carry out solid extraction (leaching) generally. A vessel type extractor, an immersion type extractor, a through flow type extractor, a tower type extractor, a rotation chamber type extractor, etc. which are equipped with a mechanical stirring means or an airlift stirring means are suitably used. The extraction operation may be carried out in any one of a batch operation, a semi-batch operation and a continuous operation. Further, in the case of the continuous operation, according to a conventional method, a multistage countercurrent extraction operation is preferred.

As the extraction temperature, usually, a temperature within a range of from room temperature to less than the boiling point of the solvent is employed. Further, the extraction time is appropriately selected based on types of the extraction solvent, the amount of the extraction solvent used for a molded product, the shape and size of a molded product, the content of a solvent-soluble resin in a molded product, the form of extraction operation, the type of extraction apparatus, etc. The extraction time is preferably from 0.1 to 50 hours, more preferably from 1 to 30 hours, most preferably from 5 to 20 hours.

Further, in a case where an apparatus having both functions of kneading and extrusion is used at the time of removing the solvent from the composition (A), it is preferred to extrude the composition (A) in a strand form or pellet form, and then carry out drying, the above-described extraction, etc. to remove the solvent, thereby to prepare a fluorinated copolymer nanocomposite. Further, the solvent may be removed while kneading and heating the mixture (A). Among the above-described apparatuses, an apparatus having both functions of kneading and extrusion such as a single screw or twin screw extruder or kneader may be used to prepare the composition (A), and at the same time, the solvent may be removed by volatilization via bent ports of the tip of the extruder, thereby to prepare a fluorinated copolymer nanocomposite. In a case where the boiling point of the solvent to be removed from the composition (A) is lower than the melting point of the fluorinated copolymer, it is possible to produce a fluorinated copolymer nanocomposite continuously by carrying out melt-kneading while removing the solvent.

### (Process for producing molded fluororesin product)

The process for producing a molded fluororesin product of the present invention is a process for producing a molded fluororesin product in which a fluorinated copolymer nanocomposite is molded to produce a molded product of the fluorinated copolymer nanocomposite or a process for producing a molded fluororesin product in which the mixture (A) is heated to at least a temperature at which the fluorinated copolymer dissolves in the solvent, and then a molded product of a fluorinated copolymer nanocomposite is produced while removing the solvent.

In the fluorinated copolymer nanocomposite obtained by removing the solvent by extraction, air gaps exist at the portion where the solvent existed. When molding the fluorinated copolymer nanocomposite, to fill the air gaps and mold to a desired shape, plasticization, kneading and melting are carried out again by means of an extruder, an injection molding machine, a heat press molding machine, etc., and then molding is carried out thereafter. Since water, the solvent used for extraction, etc. may be remained in the air gaps before carrying out molding, it is preferred to carry out preliminary drying before molding.

To mold the fluorinated copolymer nanocomposite, a various machine such as an extruder or a heat press machine may be used. For example, in the case of molding by using an extruder, it is preferred to mold a pellet of the fluorinated copolymer nanocomposite with a temperature for plasticization, kneading and melting of the fluorinated copolymer nanocomposite of at least the melting point of the fluorinated copolymer, preferably at a temperature of 20°C higher than the melting point, and less than the decomposition temperature of the fluorinated copolymer. By melt extrusion molding with an extruder combined with an appropriate die, a molded fluororesin product is obtained. That is, the pellet of the fluorinated copolymer nanocomposite supplied to the extruder is subjected to plasticization, kneading and melting at a single screw or twin screw portion of the extruder, and then subsequently supplied to a die directly connected to the extruder, thereby to mold it into a molded fluororesin product having a desired shape.

A molded product may be produced by using a pellet of the fluorinated copolymer nanocomposite prepared by the above-described method in which inorganic fine particles are introduced in a high concentration level may be used as a so-called master batch, freshly mixing a fluorinated copolymer and the pellet, and then molding it.

As the process for producing a molded fluororesin product while removing the solvent from the composition (A) obtained by heating the mixture (A) to at least a temperature at which the fluorinated copolymer dissolves in the solvent, a process in which the composition (A) is produced by using an apparatus having both functions of kneading and extrusion such as a single screw or twin screw extruder or kneader, and at the same time, the solvent is removed by volatilization via bent ports of the tip of the extruder thereby to produce a molded fluororesin product may, for example, be used. In this process, it is preferred to use a solvent having a boiling point lower than the melting point of the fluorinated copolymer.

The die to be mounted on a molding apparatus may be appropriately selected based on the shape of the molded fluororesin product. In a case where the molded fluororesin product is a hollow tube such as a tube, pipe or a hollow fiber, it is preferred to use a circular die (a hollow die or a pipe die) having a die diameter depending on the sizes such as an inner diameter, an outer diameter, a tube thickness, etc. of the hollow tube. As such a circular die, a straight die, a crosshead die, an offset die or the like may be used. The hollow tube extruded from the circular die is usually immersed into a water bath for cooling. Further, in a case where the molded fluororesin product is a flat membrane such as a film, a sheet or the like, it is preferred to use a T die (or a flat die) depending on the thickness of the flat membrane. The fluorinated copolymer nanocomposite which is plasticized, kneaded and melted with an extruder from the pellet is supplied to a T die and broadened, and then extruded from the gap of the tip, cooled and solidified by a cast roll or the like while picking it up to obtain a molded fluororesin product such as a film, a sheet or the like. Further, in the case where the molded product is a relatively thick sheet, instead of extrusion molding, calendar molding or press molding may be used for production. Among them, the molded fluororesin product is preferably a fluororesin film.

The elastic modulus of the molded fluororesin product of the present invention is preferably from 200 to 500 MPa, more preferably from 200 to 400 MPa, most preferably from 200 to 350 MPa.

### (Operation and effect)

According to the production process of the present invention, it is possible to increase the dispersability of the inorganic fine particles in a fluorinated copolymer. Further, it is also possible to disperse various fillers other than inorganic fine particles.

According to the production process of the present invention, it becomes possible to mix a filler having a low heat resistance temperature which heretofore cannot be mixed at a temperature of not less than the melting point of a fluorinated copolymer, to a fluorinated copolymer. Further, even in the case of a filler which will be crushed during melt-kneading by a shearing energy, the melt viscosity of a fluorinated copolymer composition can be lowered by using a solvent, whereby dispersion in a fluorinated copolymer while suppressing disintegration becomes easier.

Further, the mixing technique for the production process of the present invention can be used for removal of a filler contained in a fluorinated copolymer. To remove a filler contained in a fluorinated copolymer, a composite comprising the fluorinated copolymer and the filler is mixed with a solvent which can dissolve the fluorinated copolymer, heated as the case requires, and then let the fluorinated copolymer dissolve in the solvent to remove the filler by means of a fine filter or the like. In the case where the filler is not removed by means of a filter or the like, by using a difference in specific gravity between the fluorinated copolymer and the filler, the filler can be removed by means of centrifugation or the like. Such a removal method is also used as a technique for separating not only the filler but also wastes and a material which does not dissolve in the solvent, thereby to reproduce a fluorinated copolymer containing no filler, etc.

### EXAMPLES

Now, the present invention will be described with reference to examples. However, it should be understood that the present invention is by no means restricted to such specific examples.

The melt index (MI), the moisture permeability, the transparency and the elastic modulus of a tetrafluoroethylene·ethylene copolymer (hereinafter referred to as ETFE) were measured by the following methods.

### (Melt index (MI))

In accordance with ASTM D3159-98, MI was measured by using Melt Indexer (manufactured by Takara Kogyo K.K.) at 297°C.

### (Moisture permeability)

In accordance with JIS L1099, moisture permeability was measured by the calcium chloride method (A-1 method). A film having a thickness of about 0.1 mm was used for the measurement, and the result was calculated as 0.1 mm.

### (Transparency)

A molded fluororesin product having a thickness of about 0.1 mm in which no inorganic fine particles (a dotted pattern) were confirmed by visual observation was designated as O (good), and one in which inorganic fine particles (a dotted pattern) were confirmed by visual observation was designated as × (not good).

### (Elastic modulus)

In accordance with ISO527-1 (JIS K7161), tensile elastic modulus was measured by using strograph manufactured by Toyo Seiki Seisaku-sho, Ltd. The measurement was carried out with a sample thickness of 1 mm and a strain of from 0.5 to 0.7 mm.

### [Example 1]

Into a glass container, 350 g of 2,6-difluorobenzonitrile having a liquid temperature of 60°C, and 1.75 g of clay (Nanofil 15: manufactured by Kunimine Industries Co., Ltd., average particle size: 25 µm, intercalation material: dimethyl distearyl ammonium chloride) as the inorganic fine particles were mixed to have 0.5 wt% concentration, followed by an ultrasonic wave application in a 60°C hot water bath to obtain a dispersion.

By using a combined kneading extruder IMC-1973 (manufactured by Imoto Machinery Co., Ltd.), 50 g of ETFE (Fluon (registered trademark) LM-720AP: manufactured by Asahi Glass Company, Limited, melting point: 225°C, melt index: 18.7 (297°C)) and 351.75 g of a 2,6-difluorobenzonitrile solution in which the above clay was dispersed were mixed in a kneading tank at 190°C for 10 minutes to have a clay content of 3.5 parts by mass based on 100 parts by mass of an ETFE resin, and then extruded to obtain a strand-shaped molded product. The mass ratio of ETFE/clay/2,6-difluorobenzonitrile in the composition was found to be 100/3.5/696.5. The strand diameter was found to be about 5 mm.

The strand of the above-described composition was dipped in acetone having a liquid temperature of 60°C for 1 hour in a pressure resistance container, and then 2,6-difluorobenzonitrile was extracted, followed by drying to obtain a fluorinated copolymer nanocomposite.

The obtained fluorinated copolymer nanocomposite was pressed at 280°C by using a heat pressing machine manufactured by Daishin Kikai Corporation to mold it into a film-shaped molded fluororesin product, and then the moisture permeability and the elastic modulus of the obtained film were measured. The results are shown in Table 1.

### [Example 2]

A strand-shaped composition was obtained by mixing in the same manner as in Example 1 except that the amount of the clay to be dispersed in 2,6-difluorobenzonitrile having a liquid temperature of 60°C was changed to an amount by which the clay content becomes 1.0 mass%. The mass ratio of ETFE/clay/2,6-difluorobenzonitrile in the composition was found to be 100/3.5/346.5.

Then, a film-shaped molded fluororesin product was obtained by conducting extraction of the solvent from the strand, drying and molding in the same manner as in Example 1. The moisture permeability and the elastic modulus of the obtained film were measured. The obtained results are shown in Table 1.

### [Comparative Example 1]

ETFE (Fluon (registered trademark) LM-720AP: manufactured by Asahi Glass Company, Limited) was molded to a film-shaped molded fluororesin product at 280°C by using a heat pressing machine manufactured by Daishin Kikai Corporation, and then its moisture permeability and elastic modulus were measured. The results are shown in Table 1.

### [Comparative Example 2]

By using Labo Plastomill manufactured by Toyo Seiki Seisaku-sho, Ltd., 28.95 g of ETFE (Fluon (registered trademark) LM-720AP: manufactured by Asahi Glass Company, Limited) and 1.05 g of clay (Nanofil15: manufactured by Kunimine Industries, Co., Ltd.) were mixed to have a clay content of 3.5 mass% based on ETFE and kneaded at 240°C for 10 minutes to obtain a fluorinated copolymer nanocomposite. The obtained fluorinated copolymer nanocomposite was molded to a film-shaped molded fluororesin product at 280°C by using a heat pressing machine manufactured by Daishin Kikai Corporation, and then the moisture permeability and the elastic modulus of the obtained film were measured. The results are shown in Table 1.

### [Comparative Example 3]

By using Labo Plastomill manufactured by Toyo Seiki Seisaku-sho, Ltd., a mixture was obtained in the same manner as in Example 2 except that powder type ETFE (Fluon (registered trademark) LM-720AP: manufactured by Asahi Glass Company, Limited) and a 2,6-difluorobenzonitrile dispersion of clay (Nanofil15: manufactured by Kunimine Industries, Co., Ltd.) were mixed at 25°C for 10 minutes. Then, the mixture was dipped in acetone having a liquid temperature of 60°C in a pressure resistance container for 1 hour to extract 2,6-difluorobenzonitrile, and then the mixture was dried. The obtained mixture of ETFE and clay was molded to a film-shaped molded fluororesin product at 280°C by using a heat pressing machine manufactured by Daishin Kikai Corporation. However, a transparent film was not obtained.

### [Comparative Example 4]

To Normal Hexane having a liquid temperature of 25°C, clay (Nanofil15: manufactured by Kunimine Industries, Co., Ltd., average particle size: 25 µm, intercalation material: dimethyl distearyl ammonium chloride) was introduced as inorganic fine particles in an amount by which the clay content becomes 0.5 mass%, followed by an ultrasonic wave application in a 25°C water bath to obtain a dispersion.

By using a combined kneading extruder IMC-1973 (manufactured by Imoto Machinery Co., Ltd.), ETFE (Fluon (registered trademark) LM-720AP: manufactured by Asahi Glass Company, Limited) and a Normal Hexane dispersion of clay were mixed at 50°C for 10 minutes to have a clay content of 3.5 mass% based on ETFE. However, ETFE and a Normal Hexane dispersion were separated, whereby a composition was not obtained.

**[Table 1]**

| | Ex. 1 | Ex. 2 | Comp. Ex. 1 | Comp. Ex. 2 | Comp. Ex. 3 |
|---|---|---|---|---|---|
| Clay (mass%) | 3.5 | 3.5 | Not contained | 3.5 | 3.5 |
| Moisture permeability (g/m² day) | 4.87 | 5.50 | 7.88 | 12.35 | - |
| Moisture permeability (g·0.1 mm/m² day) | 4.70 | 3.34 | 6.89 | 5.95 | - |
| Elastic modulus (MPa) | 280.3 | 209.1 | 190.7 | 240.4 | - |
| Transparency | O | O | O | × | × |

### INDUSTRIAL APPLICABILITY

The fluorinated copolymer nanocomposite in which inorganic fine particles are dispersed in a fluorinated copolymer comprised of repeating units based on tetrafluoroethylene and repeating units based on ethylene, which is obtained by the production process of the present invention, is a material having a high elastic modulus, a high transparency and a high water-vapor barrier property. Further, the production process of the present invention is useful as a technique to disperse a filler, which will be denatured when its temperature is raised to the melting point of a fluorinated copolymer, in the fluorinated copolymer. The molded fluororesin product produced by this process is suitable for an application which requires chemical resistance, heat resistance, weather resistance, etc., and further requires a water-vapor barrier property. Specifically, it can be used, for example, as a fuel hose, a tube, a solar cell back sheet, a protective film, a mold release film, an agricultural film, etc.

The entire disclosure of Japanese Patent Application No. 2009-275757 filed on December 3, 2009 including specification, claims and summary is incorporated herein by reference in its entirety.

## Claims

1. A process for producing a fluorinated copolymer nanocomposite comprising a fluorinated copolymer and inorganic fine particles, **characterized in that** a mixture (A) containing a fluorinated copolymer comprised of repeating units based on tetrafluoroethylene and repeating units based on ethylene, inorganic fine particles, and a solvent which can dissolve the fluorinated copolymer under ordinary or elevated pressure at a temperature of not higher than the melting point of the fluorinated copolymer, is heated to at least a temperature at which the fluorinated copolymer dissolves in the solvent, and the solvent is subsequently removed.

2. The process for producing a fluorinated copolymer nanocomposite according to Claim 1, wherein the mass ratio of the total amount of the fluorinated copolymer and the inorganic fine particles to the amount of the solvent in the mixture (A) ((fluorinated copolymer + inorganic fine particles)/solvent) is from 1/99 to 90/10.

3. The process for producing a fluorinated copolymer nanocomposite according to Claim 1 or 2, wherein the mixture (A) is a mixture of the fluorinated copolymer and a dispersion prepared by preliminarily dispersing the inorganic fine particles in the solvent.

4. The process for producing a fluorinated copolymer nanocomposite according to any one of Claims 1 to 3, wherein the amount of the solvent in the mixture (A) is an amount larger than the amount at which the total amount of the fluorinated copolymer in the mixture (A) can be dissolved.

5. The process for producing a fluorinated copolymer nanocomposite according to any one of Claims 1 to 4, wherein the molar ratio of (repeating units based on tetrafluoroethylene) / (repeating units based on ethylene) is from 90/10 to 35/65, and the total content of repeating units based on tetrafluoroethylene and repeating units based on ethylene is larger than 80 mol% based on the total repeating units.

6. The process for producing a fluorinated copolymer nanocomposite according to any one of Claims 1 to 5, wherein the average particle size of the inorganic fine particles is from 0.1 nm to 3 µm.

7. The process for producing a fluorinated copolymer nanocomposite according to any one of Claims 1 to 6, wherein the solvent is at least one member selected from the group consisting of a fluorinated aromatic compound, an aliphatic compound containing at least one carbonyl group, and a hydrofluoroalkyl ether.

8. The process for producing a fluorinated copolymer nanocomposite according to any one of Claims 1 to 7, wherein the fluorinated copolymer nanocomposite contains from 0.1 to 30 mass% of the inorganic fine particles based on the fluorinated copolymer.

9. The process for producing a fluorinated copolymer nanocomposite according to any one of Claims 1 to 8, wherein the temperature for heating the mixture (A) is less than the melting point of the fluorinated copolymer.

10. A process for producing a molded fluororesin product, **characterized in that** the fluorinated copolymer nanocomposite produced by the process as defined in any one of Claims 1 to 9 is molded to produce a molded product of the fluorinated copolymer nanocomposite.

11. A process for producing a molded fluororesin product, **characterized in that** molding of the fluorinated copolymer nanocomposite produced by the process as defined in any one of Claims 1 to 9 is carried out while removing the solvent.

12. The process for producing a molded fluororesin product according to Claim 10 or 11, wherein the molded fluororesin product is a fluororesin film.
